# EUROPEAN PATENT APPLICATION

(11) **EP 2 790 039 A2**
(43) Date of publication of application: **15.10.2014**
(21) Application number: 14164179.5
(22) Date of filing: 10.04.2014
(51) Int. Cl.: G01V 3/00, H01P 3/00

(54) **System and Method for Detecting Scattered Signals**

(30) Priority: 10.04.2013 GB 201306555
(71) Applicant: ROKE MANOR RESEARCH LIMITED, Romsey, Hampshire SO51 0ZN (GB)
(72) Inventor: Turner, Janice, Romsey, Hampshire SO51 0ZN (GB); Jessup, Mike, Romsey, Hampshire SO51 0ZN (GB); Mills, Mary, Romsey, Hampshire SO51 0ZN (GB)
(74) Representative: Thompson, Andrew John

(57) **Abstract**

A system for detecting electromagnetic surface waves scattered from a guiding medium, the system comprising: a guiding medium for guiding electromagnetic surface waves; a transmitter arranged to cause electromagnetic surface waves to be transmitted along the guiding medium; at least one transducer arranged to receive electromagnetic waves scattered from said guiding medium as a result of disruption to a surface wave passing over the guiding medium; and a sensor coupled to the transducer and arranged to detect said received electromagnetic waves.

## Description

The present invention relates to a system and method for detecting scattered signals. In particular, it relates to a system and method for detecting electromagnetic surface waves scattered from a guiding medium suitable for carrying electromagnetic surface waves.

### Background to the Invention

The applicant's prior published patent application GB2494435 discloses a communication system which utilises a guiding medium which is suitable for sustaining electromagnetic surface waves. The contents of GB2494435 are hereby incorporated by reference. The present application presents various applications and improvements to the system disclosed in GB2494435.

### Summary of the Invention

In a first aspect, the present invention provides a system for detecting electromagnetic surface waves scattered from a guiding medium, the system comprising: a guiding medium for guiding electromagnetic surface waves; a transmitter arranged to cause electromagnetic surface waves to be transmitted along the guiding medium; at least one transducer arranged to receive electromagnetic waves scattered from said guiding medium as a result of disruption to a surface wave passing over the guiding medium; and a sensor coupled to the transducer and arranged to detect said received electromagnetic waves.

In a second aspect, the present invention provides a method of detecting electromagnetic surface waves scattered from a guiding medium in a system, the system comprising: a guiding medium for guiding electromagnetic surface waves; a transmitter arranged to cause electromagnetic surface waves to be transmitted along the guiding medium; at least one transducer arranged to receive electromagnetic waves scattered from said guiding medium as a result of disruption to a surface wave passing over the guiding medium; and a sensor coupled to the transducer and arranged to detect said received electromagnetic waves; the method comprising: transmitting electromagnetic surface waves along the guiding medium; receiving scattered electromagnetic surface waves at said at least one transducer in the presence of a disruption to the surface waves passing over the guiding medium; and detecting said received electromagnetic waves.

Further examples of features of embodiments of the present invention are recited in the appended claims.

### Brief Description of Embodiments of the Invention

Embodiments of the present invention will now be described, by way of example only, and with reference to the accompanying drawings, in which:
Figure 1 shows a system in accordance with a first embodiment of the present invention;
Figure 2 shows a system in accordance with a second embodiment of the present invention; and
Figure 3 is a flow chart showing a method in accordance with an embodiment of the present invention.

### Detailed Description of Embodiments of the Invention

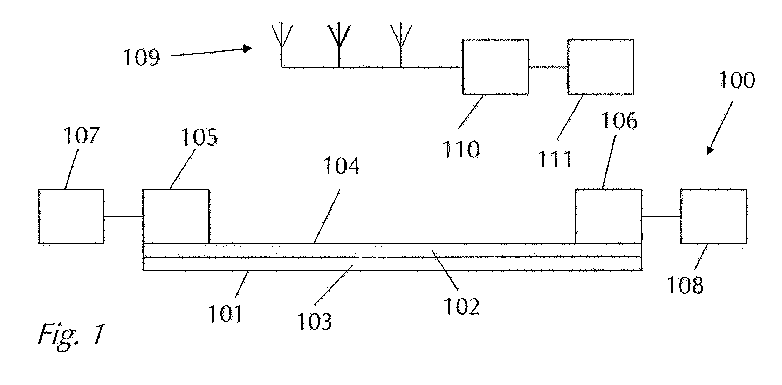

A first embodiment of the invention will be described in connection with Figure 1. Figure 1 shows a system 100 which may be used to detect surface waves scattered as space waves due to objects near or on the guiding medium, or breaks in the guiding medium. The system 100 includes a guiding medium 101. The guiding medium 101 is a high impedance channel in which the reactive impedance is higher than the resistive impedance. Such a channel is suitable for the propagation of electromagnetic surface waves. In this example, the guiding medium includes a dielectric layer 102 and a conductive layer 103. This guiding medium is similar to the one described in the applicant's co-pending patent application published under number GB2494435. As will be appreciated, the high impedance channel may take other forms, as described in GB2494435.

The dielectric layer 102 is a sheet of material having a uniform thickness. The width and length of the dielectric layer 102 will vary depending on the specific application. In this example, an upper surface 104 of the dielectric layer 102 is the surface over which surface waves are transmitted. The conductive layer 103 is also a sheet of material having a uniform thickness. The width and length of the conductive layer 103 are generally the same as those equivalent dimensions of the dielectric layer 102, but they are not necessarily the same. The conductive layer 103 is positioned against the dielectric layer 102. The dielectric layer 102 and the conductive layer 103 accordingly form a dielectric coated conductor.

The upper surface 104 of the dielectric layer 102, and hence the guiding medium 101, has a reactive impedance which is greater than its resistive impedance. Such a surface is suitable for guiding surface waves. In particular, the reactance and resistance is such that the surface is suitable for guiding Zenneck surface waves. The layer of air formed above the guiding medium acts as the transmission medium for the surface wave.

The system 100 includes a transmit launcher 105 and a receive collector 106. The system 100 also includes a transmitter 107 and a receiver 108. The transmitter 107 is arranged to transmit a signal to transmit launcher 105. The transmit launcher 105 modulates a carrier signal which is then launched onto the guiding medium 101. The receive collector 106 receives the surface waves which have propagated over the guiding medium 101. The receive collector 106 has the same construction as the transmit launcher 105. However, it operates in reverse, collecting surface waves from the guiding medium 101, rather than launching them. The receive collector 106 demodulates the carrier signal and passes the received signal to the receiver 108.

The system 100 effectively forms a communications channel in which signals may be sent from one point to another, via the guiding medium 101. Accordingly, the guiding medium 101 acts as a transmission line. As such, anything which interferes with the transmission of signals along the transmission line may cause the signal to be scattered as a space wave. Such a wave may then be detected.
The system 100 also includes a transducer array 109, which is coupled to a receiver 110. The transducer array 109 is arranged to detect surface wave signals scattered from the surface of the guiding medium 101. Scattering may occur due to obstacles near or on the guiding medium 101, or breaks in the guiding medium. The receiver 110 is coupled to a detector unit 111, which is arranged to detect scattered surface waves. The transducer array 109 is mounted in close proximity to the guiding medium 101. The detector unit 111 is calibrated to determine when scattered surface waves represent an object nearer to the guiding medium 101, or a break or disruption to the surface on which the guiding medium is attached.

It has been appreciated by the applicant that when items move close to the guiding medium 101, or when an item is positioned on the guiding medium or the guiding medium breaks, the surface wave is scattered as a space wave. Such a space wave may be detected by the transducer array 109, receiver 110 and detector unit 111.

There are various applications for this system. For example, the system 100 may be used to detect damage to a surface, including the appearance of gaps or movement in a surface. For example, a guiding medium 101 may be placed on a structurally important surface of a vehicle, such as an aircraft wing. Any movement, cracks or gaps that appear in the surface will stretch, move or break the guiding medium. Such movement will result in scattering of the surface wave, which may be detected by detector unit 111.

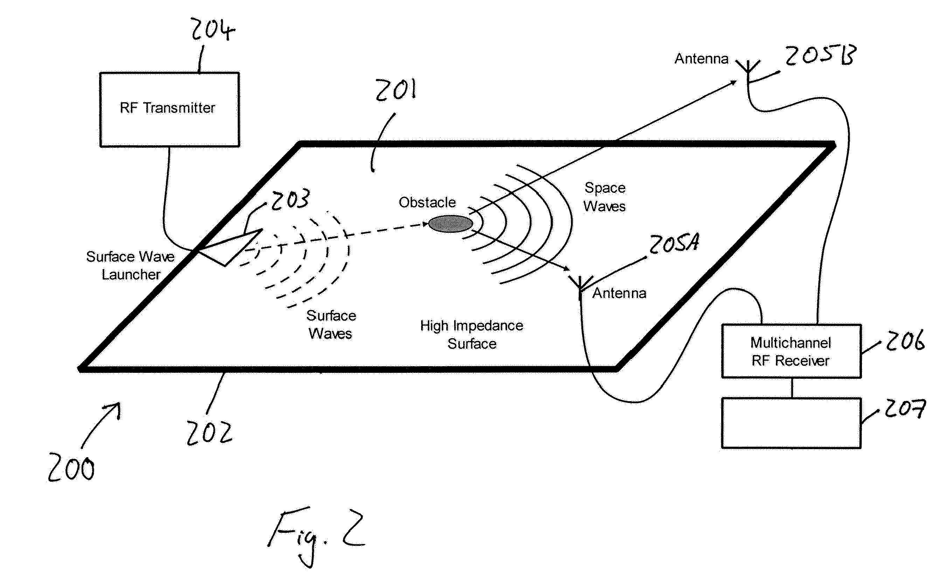

A second embodiment of the invention will now be described in connection with Figure 2. Figure 2 shows a system 200 which may be used to detect surface waves scattered as space waves due to objects near or on the guiding medium, or breaks in the guiding medium. The system 200 includes a guiding medium 201. The guiding medium 201 is a high impedance surface in which the reactive impedance is higher than the resistive impedance. In this embodiment, the guiding medium 201 is a surface over which surface waves may propagate in several directions. This is in contrast to the previous embodiment in which surface waves generally propagate in a single direction along a channel. As with the previous embodiment, the guiding medium includes a dielectric layer 202 and a conductive layer (not shown). The guiding medium is similar to the one described in the applicant's co-pending patent application published under number GB2494435. As will be appreciated, the high impedance channel may take other forms, as described in GB2494435.

The dielectric layer 202 is a sheet of material having a uniform thickness. The width and length of the dielectric layer 202 will vary depending on the specific application. In this example, an upper surface of the dielectric layer 202 is the surface over which surface waves are transmitted. The conductive layer is also a sheet of material having a uniform thickness. The width and length of the conductive layer are generally the same as those equivalent dimensions of the dielectric layer 202, but they are not necessarily the same. The conductive layer is positioned against the dielectric layer 202. The dielectric layer 202 and the conductive layer accordingly form a dielectric coated conductor.

The upper surface of the dielectric layer 202, and hence the guiding medium 201, has a reactive impedance which is greater than its resistive impedance. Such a surface is suitable for guiding surface waves. In particular, the reactance and resistance is such that the surface is suitable for guiding Zenneck surface waves. The layer of air formed above the guiding medium acts as the transmission medium for the surface wave.

The system 200 includes a surface wave launcher 203. The system 200 also includes a transmitter 204. The transmitter 201 is arranged to transmit a signal to surface wave launcher 203. The surface wave launcher 203 modulates a carrier signal which is then launched onto the guiding medium 201. In this embodiment, the surface waves propagate in a fan-like pattern, as shown in Figure 2. When an obstacle is placed in the path of the surface waves, some of the surface wave is scattered as a space wave. This is also true when objects are moved within close proximity of the guiding medium 201, or if the guiding medium is broken, thereby causing disruption in the propagation path.

The system 200 also includes a transducer antennas 205A, 205B, which are coupled to a multichannel RF receiver 206. The antennas 205A, 205B are equivalent to the transducer array 109 shown in Figure 1, and are arranged to detect surface wave signals scattered from the surface of the guiding medium 201. Scattering may occur due to obstacles near or on the guiding medium 201, or breaks in the guiding medium. The receiver 206 is coupled to a detector unit 207, which is arranged to detect scattered surface waves. The antennas 205A, 205B are mounted in close proximity to the guiding medium 201. The detector unit 207 is calibrated to determine when scattered surface waves represent an object nearer to the guiding medium 201, or a break or disruption to the surface on which the guiding medium is attached.

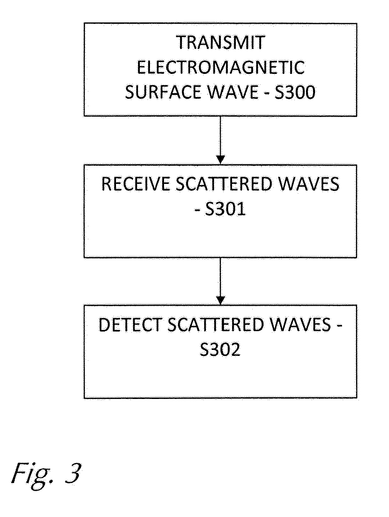

Figure 3 is a flow-chart showing a method in accordance with an embodiment of the present invention. The process begins by transmitting an electromagnetic surface wave along the guiding medium (S300). Following this, any scattered surface waves are received by the one or more transducers (S301). Finally, the received waves are detected by the detector (S302).

Further modifications and variations of the aforementioned systems and methods may be implemented within the scope of the appended claims.

## Claims

1. A system for detecting electromagnetic surface waves scattered from a guiding medium, the system comprising:
a guiding medium for guiding electromagnetic surface waves;
a transmitter arranged to cause electromagnetic surface waves to be transmitted along the guiding medium;
at least one transducer arranged to receive electromagnetic waves scattered from said guiding medium as a result of disruption to a surface wave passing over the guiding medium; and
a sensor coupled to the transducer and arranged to detect said received electromagnetic waves.

2. A system according to claim 1, wherein the sensor is further arranged to measure a change in received signal power.

3. A system according to claims 1 or 2, wherein said scattering is caused by a change in the proximity of an object to the guiding medium.

4. A system according to claims 1 or 2, wherein said scattering is caused by a change in a surface to which the guiding medium is attached.

5. A system according to any preceding claim, further comprising a launcher, coupled between the transmitter and the guiding medium, and arranged to launch said surface waves over said guiding medium.

6. A system according to any preceding claim, wherein the guiding medium is a high impedance surface.

7. A system according to claim 6, wherein the guiding medium is a dielectric, a dielectric coated conductor, or a corrugated surface.

8. A method of detecting electromagnetic surface waves scattered from a guiding medium in a system, the system comprising: a guiding medium for guiding electromagnetic surface waves; a transmitter arranged to cause electromagnetic surface waves to be transmitted along the guiding medium; at least one transducer arranged to receive electromagnetic waves scattered from said guiding medium as a result of disruption to a surface wave passing over the guiding medium; and a sensor coupled to the transducer and arranged to detect said received electromagnetic waves; the method comprising:
transmitting electromagnetic surface waves along the guiding medium;
receiving scattered electromagnetic surface waves at said at least one transducer in the presence of a disruption to the surface waves passing over the guiding medium; and
detecting said received electromagnetic waves.

9. A method according to claim 8, further comprising: measuring a change in received signal power.

10. A method according to claims 8 or 9, wherein said scattering is caused by a change in the proximity of an object to the guiding medium.

11. A method according to claims 8 or 9, wherein said scattering is caused by a change in a surface to which the guiding medium is attached.

12. A method according to any of claims 8 to 11, further comprising: launching said electromagnetic surface waves using a launcher, coupled between the transmitter and the guiding medium.

13. A method according to any of claims 8 to 12, wherein the guiding medium is a high impedance surface.

14. A method according to claim 13, wherein the guiding medium is a dielectric, a dielectric coated conductor, or a corrugated surface.
